# EUROPÄISCHE PATENTANMELDUNG

(11) **EP 1 505 367 A2**
(43) Veröffentlichungstag der Anmeldung: **09.02.2005**
(21) Anmeldenummer: 04101753.4
(22) Anmeldetag: 27.04.2004
(51) Int. Cl.: G01B 11/275

(54) **Verfahren zur Bestimmung der Achsgeometrie und Sensor zu dessen Durchführung**

(30) Priorität: 05.08.2003 DE 10335829
(71) Anmelder: SIEMENS AKTIENGESELLSCHAFT, 80333 München (DE)
(72) Erfinder: Forster, Frank, 80377 München (DE); Jahn, Lars, 90431 Nürnberg (DE); Laloni, Claudio, 82024 Taufkirchen (DE)

(57) **Zusammenfassung**

Zur Bestimmung der Achsgeometrie durch Aufnahme und Auswertung eines topographischen Bildes der Stirnseite (6) eines auf einer Achse (2) angebrachten Rades (1), wird folgendermaßen vorgegangen:
- flächige Projizierung von Licht mit einer flächigen Codierung auf die Stirnseite (6) des Rades (1),
- flächige Aufnahme des von der Stirnseite (6) des Rades (1) reflektierten Lichtes aus einer anderen Richtung als der Licht-Projektionsrichtung durch einen Bildwandler (8),
- Ermittlung von dreidimensionalen Oberflächenkoordinaten für das topographische Bild der Stirnseite (6) des Rades (1) aus den Lichtsignalen, und
- Auswertung des topographischen Bildes in Bezug auf ein Referenzsystem.

## Beschreibung

Die Erfindung betrifft ein Verfahren und einen Sensor zur Bestimmung der Achsgeometrie, wie beispielsweise Spur und Sturz, an den Achsen eines Kraftfahrzeugs. Eine derartige Bestimmung erfolgt in der Regel für jedes auf eine Achse montierte Rad mittels der Bestimmung des Normalenvektors auf der Stirnseite eines Rades in Relation zu einem gemeinsamen Referenzsystem.

Eine Messung der Achsgeometrie an montierten Rädern erfolgt in der Regel bei der Endmontage von Fahrzeugen oder bei Arbeiten am Fahrwerk in einer Werkstatt. Um die relative Ausrichtung von Rädern in Bezug auf ein Referenzsystem, beispielsweise die Achse oder das gesamte Fahrzeug, unter Einhaltung bestimmter Sollwerte einzustellen, müssen zunächst die Ist-Werte ermittelt werden. Im Anschluss daran erfolgt über Verstellelemente die genaue Ausrichtung der Räder, wobei eine neue Einstellung zur Kontrolle nochmals vermessen werden kann.

Die Achsgeometrievermessung erfolgt im Stand der Technik mit Hilfe von Lasersonden. Für die Beleuchtung und Signalaufnahme werden sogenannte Lichtschnittverfahren verwendet. Dabei wird für jedes zu vermessende Rad eine Mehrzahl von Lasersonden eingesetzt, wobei jede jeweils eine Lichtlinie in radialer Richtung auf der äußeren Reifenmantelfläche projiziert. Von diesem linienförmigen Bereich des Reifenmantels wird ein Höhenprofil aufgenommen, bzw. errechnet, welches in einem gemeinsamen Referenzkoordinatensystem liegt.

Durch eine Kombination der Messergebnisse mehrerer Sensoren kann die Lage von Normalenvektoren von Rädern bestimmt werden. Dies kann an einzelnen sowie an sämtlichen Rädern gleichzeitig geschehen. Der praktische Nutzen besteht in der Bestimmung der Spur- und Sturzwerte und deren Bewertung hinsichtlich der Abweichung von Sollwerten.

Um die Lage eines Reifens relativ zu einem Referenzsystem zu ermitteln, gibt es im Stand der Technik verschiedene Möglichkeiten. So offenbart beispielsweise die DE-A-29 48 573 ein Verfahren und eine Vorrichtung zur kontaktlosen Messung an Fahrzeugachsen. Es werden berührungslose Messungen zur Ermittlung der Achsgeometrie an Kraftfahrzeugen beschrieben, die neben einer Beleuchtung Empfangseinheiten in Form von Fernsehaufnahmeröhren umfassen. Behandelt wird das elliptische Bild des äußeren Felgendurchmessers eines Rades, wobei die Kenndaten der Ellipse ermittelt werden. Durch Änderung der Relativposition zwischen Fernsehkamera und Rad werden dabei zur Auswertung mehrere Bilder aufgenommen.

Aus der US-A-4,745,469 ist beispielsweise ein kontaktlos aufnehmender Sensor bekannt, der mit strukturiertem Licht einen rotierenden Reifen zumindest mit zwei Konturlinien auf der Oberfläche des Reifens beleuchtet. Die Konturlinien werden über das entsprechend zurück reflektierte Licht mittels einer Videokamera aufgenommen, optoelektronisch umgesetzt und ausgewertet. Abstandsmessungen geschehen per Triangulation.

Die im Stand der Technik offenbarten Messverfahren zur Analyse einer Achsgeometrie an einem Fahrzeug weisen insgesamt den Nachteil auf, dass sie beleuchtungsseitig lediglich Linien, Kreise oder Ellipsen als geometrisch strukturierte Lichtmuster auf ein zu vermessendes Rad projizieren. Somit ist eine vollständige Aufnahme der Oberfläche eines Rades nicht möglich, selbst wenn eine Mehrzahl von Bildern an einem rotierendem Rad sukzessive ausgewertet wird. Die Einflüsse von Unebenheiten auf Manteloberflächen von Fahrzeugrädern spielen jedoch eine wesentliche Rolle und stören die Bildauswertung oder lassen keine stabile Messwerterkennung zu. Unebenheiten auf der Reifenoberfläche sind beispielsweise die Bezeichnungen der Reifenmarke, Größenangaben, Laufrichtungspfeile oder andere Spezifikationen. Um eine Referenzebene zu ermitteln, die stellvertretend für beispielsweise die äußere Stirnseite eines Reifens ist, müssen Störeinflüsse durch Unebenheiten, die nicht gleichmäßig über den Reifenumfang verteilt sind, herausgerechnet oder ausgemittelt werden. Dies ist mit einem Verfahren entsprechend dem Stand der Technik insofern nicht möglich, als entweder die Reifenausrichtung über die Ermittlung der Stellung der Reifenfelge geschieht oder der Reifenmantel lediglich durch wenige Konturlinien abgetastet bzw. beleuchtet wird.

Der Erfindung liegt die Aufgabe zugrunde, ein Verfahren und einen Sensor zur Vermessung der Achsgeometrie an einem Fahrzeug bereitzustellen. Es soll insgesamt die Erkennungssicherheit in der Datenverarbeitung gesteigert um eine robuste Ausführung des entsprechenden Sensors zu erzielen. Die Lösung dieser Aufgabe geschieht durch den jeweiligen Gegenstand von Anspruch 1 bzw. Anspruch 15 oder 18. Vorteilhafte Ausgestaltungen sind den Unteransprüchen zu entnehmen.

Der Erfindung liegt die Erkenntnis zugrunde, dass zur Vermessung der Achsgeometrie von Rädern an einem Fahrzeug mit Hilfe der Berechnung eines Normalenvektors oder einer Referenzebene eines Rades eine besonders robuste und stabile Bildaufnahme und Bildverarbeitung erzielbar ist. Aufgrund von nicht gleichmäßig über den Umfang verteilten Unebenheiten auf üblichen Rädern war es bisher sehr aufwändig, die Genauigkeit der ermittelten Messwerte zu gewährleisten. Somit wird vorgeschlagen, die Messung der Achsgeometrie bzw. die Ermittlung des normalen Vektors eines Rades durch die vollflächige Projizierung von Licht mit einer flächigen Codierung des Lichts auf die Stirnseite des Rades vorzunehmen. Im Anschluss daran folgt die vollflächige Aufnahme des von der Stirnseite des Rades reflektierten Lichts aus einer anderen Richtung als der Lichtprojizierungsrichtung durch einen Bildwandler. Daraus resultiert unmittelbar der enorme Vorteil, dass anstelle von einigen wenigen Messpunkten, wie sie im Stand der Technik verfügbar waren, eine Vielzahl von mehreren Millionen Messpunkten zur Auswertung verfügbar sind. Damit kann die nach außen sichtbare Stirnseite eines auf einer Achse montierten Rades mit einem Bild charakterisiert werden, wobei die Auswertung auf eine Vielzahl von Bildpunkten aufsetzen kann. Dies ergibt insofern ein robustes und stabiles Bilderkennungs- und verarbeitungssystem als jede Unebenheit auf der Stirnseite eines Rades insbesondere auf der ringförmigen, flächig ausgebildeten Außenseite eines Radmantels erfasst und eine Referenzebene zuverlässig ermittelt werden kann. Als Unebenheit bzw. als Störung ist hier auch der bei jedem Luftreifen auftretende Wulst in der Nähe der Auflagefläche des Reifens auf dem Boden zu bewerten.

Es wird bei einem Verfahren zur Messung der Achsgeometrie bzw. zur Ermittlung eines normalen Vektors ein sogenanntes Höhenrasterbild oder Abstandsbild aufgenommen, wobei die Codierung des zur Objektbeleuchtung dienenden Lichts zur Organisation der von einem Bildwandler empfangenen, vom Objekt reflektierten Lichtstrahlen dient. Praktisch gleichzeitig wird für jeden Bildpunkt ein Abstandswert zwischen Bildwandler und Objekt bzw. Objektpunkt ermittelt, so dass sich insgesamt ein Abstandsbild ergibt. Die Beleuchtungseinheit beleuchtet das Objekt flächig und mit einer Codierung. Als Bildwandler wird eine Videokamera, d. h. eine flächig aufnehmende Einheit zur Erzeugung von Farb- oder Grauwertbildern verwendet.

In einer besonders vorteilhaften Ausgestaltung der Erfindung ist vorgesehen, dass als Codierung entweder Streifenmuster, beispielsweise mit variierender Periodizität, monochrome Gitterstrukturen oder Farbcodierungen eingesetzt werden. Wesentlich ist, dass die Codierung flächig ausgebildet ist, so dass die Erkennungssicherheit bei der Daten- bzw. Bildverarbeitung an jeder Stelle des aufzunehmenden Objektes gewährleistet ist. Eine andere Form der Codierung ist beispielsweise gegeben durch ein zweidimensionales Farbmuster, bestehend aus farbigen Musterelementen, die ein besonders kompaktes und daher störungssicheres Farbmuster für eine Codierung bereitstellen. Dies dies ergibt den Vorteil, dass die Ermittlung des Projektionswinkels für ein Musterelement in der Bildaufnahme des zweidimensionalen, auf ein Objekt projizierten Farbmusters, zuverlässig realisierbar ist. Der besondere Vorteil liegt darin, dass ein solches Farbmuster nur einmal auf das Objekt projiziert werden muss.

Ein besonders vorteilhaftes Codierungsverfahren ist beispielsweise aus der deutschen Patentanmeldung mit der Anmeldenummer 102 32 690.8 bekannt. Darin wird beispielsweise ein zu erfassendes Projekt mit einem Farbmuster beleuchtet, wobei die Projektionsdaten im Farbmuster mit Hilfe eines redundanten Codes codiert werden.

Der Einsatz der Videotechnik bzw. einer Videokamera erzielt insofern Vorteile als eine gängige und allgemein verfügbare, ausgereifte Technik zur Bildaufnahme herangezogen werden kann, die die Systemkosten in Grenzen hält.

Zur Berechnung des Abstands eines jeden Bildpunktes wird in vorteilhafter Weise Triangulation eingesetzt.

Das aufgenommene Abstandsbild, das auch als topografisches Bild bezeichnet wird, wird vom Sensor bzw. im Verfahren zunächst vollständig beleuchtet. Daraus resultiert eine vollständige Aufnahme der Stirnseite eines Rades. Da die Bildauswertung auf dem entsprechend flächig aufgenommenen Bild im Bildwandler aufsetzt, kann in vorteilhafter Weise durch eine zwischengeschaltete Maskierung die Bildauswertung auf wesentliche, für die Bildverarbeitung relevante Objektbereiche beschränkt werden. So kann beispielsweise der zentrale Bereich, der in der Regel die Felge eines Rades wiedergibt, ausgeklammert sein. Darüber hinaus ist vorstellbar, dass mehrere Teilflächen entlang der stirnseitigen Ringfläche des Mantels platziert und entsprechend aufgenommen und ausgewertet werden. Auf diese Art und Weise lässt sich beispielsweise der Aufstandwulst eines Luftreifens bei der Bildverarbeitung ausklammern.

Die Ermittlung der Referenzebene bzw. die Ermittlung des Normalenvektors, der unmittelbar mit der Referenzebene zusammenhängt, findet an einem rotierenden Rad statt, das mindestens eine volle Umdrehung ausführt.

Die für die Einstellung an einem Rad eines Fahrzeugs wichtigen Größen sind insbesondere der Sturz oder die Spur eines Rades. Unter Sturz ist im Allgemeinen eine Verkippung eines Rades um eine längs im Fahrzeug liegende Achse zu verstehen, während die Spur eines Rades eine Einstellung desselben betrifft, die in der Richtung, in der das Rad beim Lenken verdreht wird, liegt.

Darüber hinaus können natürlich unterschiedlichste weitere Merkmale von Rädern bzw. von angrenzenden Fahrzeugteilen ermittelt werden, solange diese dem Sensorsystem zugänglich sind.

In vorteilhafter Weise können dem topografischen Bild entnehmbare Abstandswerte weiterhin ergänzt werden durch die Erkennung von Farbvarianten. Dies ermöglicht die Erkennung von bestimmter Farben am Reifen oder an der Felge oder ähnlichen, an der Stirnseite des Rades sichtbaren Bestandteilen.

Der erfindungsgemäße Sensor verwendet eine Lichtprojektionseinheit zur flächigen Projizierung von Licht mit einer flächigen Codierung. Dies kann insbesondere von sogenannten Beamern bewerkstelligt werden, die in der Regel mit einem Chip mit einer Mikrospiegelanordnung ausgestattet sind. So werden Codierungen von einem Rechnersystem dem Beamer zugeführt und es eröffnet sich die Option eine Codierung unverändert beizubehalten oder diese dynamisch zu verändern. Der Sensor um fasst die wesentlichen Merkmale einer flächigen Lichtprojektion auf dem Objekt und die flächige Lichtaufnahme auf einem Bildwandler, beispielsweise auf einer Videokamera. Der Bildwandler kann auf vorteilhafte Weise eine CMOS-Farbkamera sein.

Im Folgenden werden anhand von schematischen, die Erfindung nicht einschränkenden Figuren Ausführungsbeispiele beschrieben.
- Figur 1: zeigt eine Messanordnung mit in Seitenansicht dargestelltem Sensor und zu vermessendem Rad,
- Figur 2: zeigt eine Anordnung entsprechend Figur 1 in der Draufsicht,
- Figur 3 A: zeigt ein Ausführungsbeispiel mit den Koordinatensystemen der Reifen, der Sensoren und dem Referenzsystem,
- Figur 3 B: zeigt die Lage von Sturz und Spur an einem einzelnen Rad,
- Figur 4: zeigt gemeinsam eine Draufsicht und eine Seitenansicht beim Ablauf des Messverfahrens,

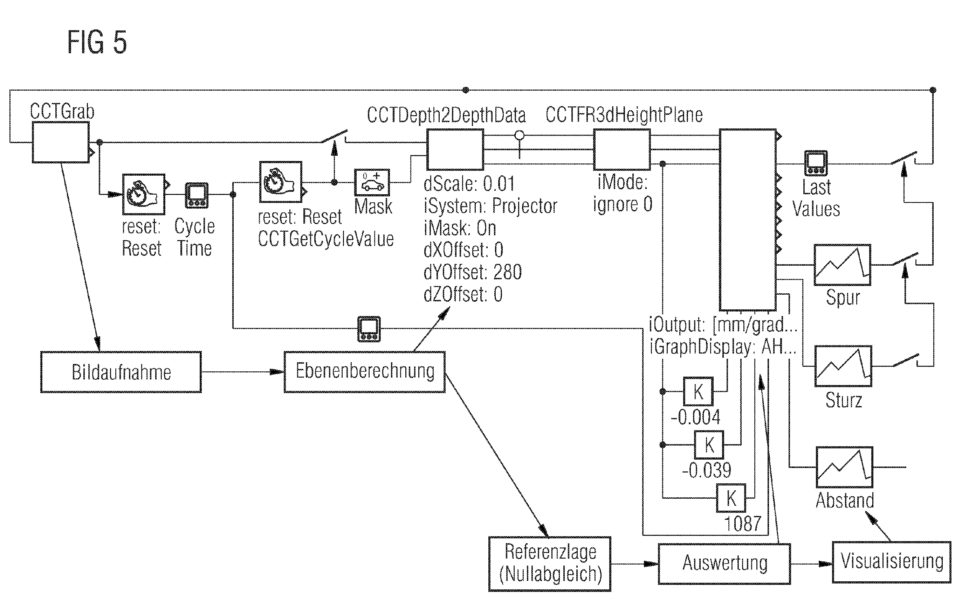

- Figur 5: zeigt einen ungefähren Messablauf,
- Figur 6: zeigt eine ermittelte Messkurve,
- Figur 7 und Figur 8: zeigen verschiedene Ansichten eines Radmantels, wobei Verfahren nach dem Stand der Technik angedeutet sind.

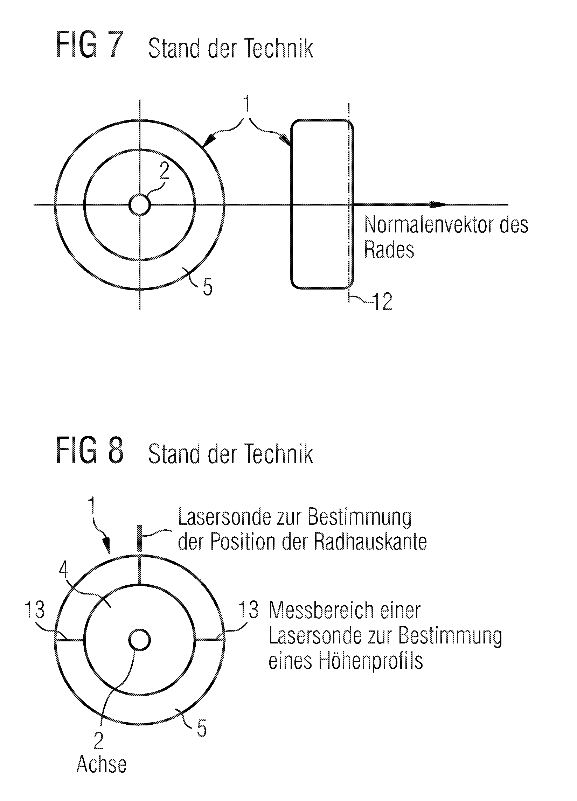

### Stand der Technik nach Figuren 7 und 8:

In Figur 7 ist eine schematische Betrachtung eines Fahrzeugsrades wiedergegeben. Im linken Teil ist der Bereich eines Rades 1 wiedergegeben, der stirnseitig wahrnehmbar ist. Auf einer Achse 2 ist in der Regel eine Felge 4 montiert, die in Figur 8 bezeichnet ist. Der ringförmig auf der Felge aufsitzende Mantel 5 wird, insbesondere dessen seitlich sichtbare Stirnseite, zur Vermessung der Achsgeometrie herangezogen. Entsprechend Figur 8 werden im Stand der Technik Lasersonden eingesetzt, die auf der Mantelfläche des Rades 1 radial ausgerichtete Konturlinien 13 aufbringen. Eine Lasersonde, die das Rad an seiner oberen Kante beleuchtet, kann beispielsweise eine Beleuchtung aufbringen, die zur Bestimmung der Position der Radhaus-Kante einsetzbar ist. Eine ermittelte Referenzebene 12 einer Stirnseite eines Rades steht in unmittelbarem Zusammenhang mit dem Normalenvektor des Rades, der senkrecht auf dieser Ebene steht. Dabei ist es unerheblich, ob der Normalenvektor in Richtung der Achse zeigt oder nicht.

Um die Einflüsse der im Allgemeinen auf den Manteloberflächen vorhandenen Unebenheiten wie Reifenbezeichnungen, Größenangaben oder Verwendungszwecke zu eliminieren, bestimmt jeder Sensor das Höhenprofil an einem Reifen durch Mittelung mehrerer Messungen, die während einer Drehung des Rades aufgenommen werden. Diese Messungen werden vollflächig durchgeführt, so dass eine jede Aufnahme aus einer Vielzahl von Messpunkten besteht, beispielsweise 3 Millionen Bildpunkte. Das Ergebnis dieser Messung liefert eine Referenzlage des Rades in einem Referenzsystem, welches sich in der Regel auf die Gesamtheit eines Fahrzeugs bezieht. Anschließend kann ohne eine Drehung des Rades gemessen werden. Somit ist lediglich die Abweichung von der zuvor bestimmten Referenzlage bei den Messungen zu betrachten. Der vorhandene Einfluss von Mantelunebenheiten wird durch die Relativbetrachtung oder durch Mittelung eliminiert. Die Ermittlung der Höhenlage der Radhaus-Kante kann einen Aufschluss darüber erbringen, inwieweit die Gewichtsverhältnisse im Fahrzeug bei der Vermessung der Achsgeometrie berücksichtigt werden müssen.

Die Messung der Achsgeometrie an Rädern eines Fahrzeugs erfolgt durch den Einsatz eines optischen, bildgebenden Sensors. Aus dessen Bildinformation werden pixelbezogen Abstandswerte des beobachteten Objektes zu einem Bildwandler berechnet und , relativ zu einem Referenzsystem, eingeordnet. Das Ergebnis stellt ein sogenanntes Tiefendatenbild oder Abstandsbild oder topografisches Bild dar. Der Sensor besteht aus einer Projektionseinrichtung, mit der codiertes Licht, wie beispielsweise Farbstreifen oder monochrome Gitterstrukturen, auf die zu vermessende Szene projiziert wird, und einer Kamera, die die so beleuchtete Szene in einem Farb- oder Grauwertbild erfasst. Aus dem aufgenommenen Bild wird mit Hilfe von Triangulation unter Einbeziehung des im Bild sichtbaren Codierungsmusters, das auch farbig sein kann, für jeden Bildpunkt der Abstand zum beobachteten Objekt berechnet. Diese Berechnung erfolgt im Allgemeinen mit einem konventionellen Heimcomputer, wobei typische Messraten von ca. 15 Tiefendatenbildern pro Sekunde erreicht werden.

Der Sensor erfasst mit dem Bildwandler 8, eine CCD- oder CMOS-Kamera, den Sichtbereich am entsprechenden Rad und die Lichtprojektionseinheit 7 kann das gesamte Rad entsprechend beleuchten. Somit kann nach einer Messung ein Höhenprofil für die gesamte Mantelfläche oder darüber hinaus auch für die gesamte Stirnfläche des Rades erfasst werden.

Wichtig ist die Verwendung eines flächenhaften Abstandssensors, so dass innerhalb einer Einzelmessung der gesamte Umfang des Reifenmantels durch eine extrem hohe Anzahl von Messdaten erfassbar ist, so dass die Robustheit und die Genauigkeit der Messung signifikant ansteigt. Vorteile liegen darin, dass die flächenhafte Behandlung der Objektoberfläche die Gesamtheit der Unebenheiten auf einem Reifenmantel mitberücksichtigt und Sprungstellen, wie im Stand der Technik, nicht auftauchen. Dies begründet sich auf der sehr großen Datenmenge, die über den Reifenmantel verteilt ist.

Der entsprechend große Arbeitsbereich des flächigen Sensors erbringt den Vorteil, dass unterschiedlichste Radgrößen mit einer einheitlichen Sensoranordnung zur Vermessung der Achsgeometrie durchgeführt werden können. Dadurch vereinfacht sich der Aufbau des Messsystems, da keine mechanische Verfahreinrichtung des Sensors erforderlich ist. Insbesondere kann auch die Radhaus-Kante ohne zusätzlichen Sensor simultan zur Achsgeometrievermessung bestimmt werden.

Neben der eigentlichen Messung des Normalenvektors des Rades kann unter Verwendung der berechneten Höhenrasterwerte weitere Messaufgaben auf der Basis der Grauwert- oder Farbdaten durchgeführt werden, wie beispielsweise die Überprüfung des montierten Felgentyps. Diese wird aufgrund der vorliegenden Geometrie der Felge ermittelt.

Im verwendeten Sensor ist eine handelsübliche Projektionseinrichtung für codiertes Licht in Kombination mit einer Standard-Videotechnik für die Bildaufnahme vorgesehen. Benötigt wird somit nur ein einziges Sensorsystem, wobei dies zur Messung des Normalenvektors eines Rades völlig ausreicht. Hierdurch werden die Systemkosten niedrig gehalten. Ein einzelnes Sensorsystem pro Rad ist ausreichend. Vereinfachte Kalibrierung geschieht dadurch, dass nur die Beziehung eines Sensorsystems zu einem Referenzsystem bestimmt werden muss.

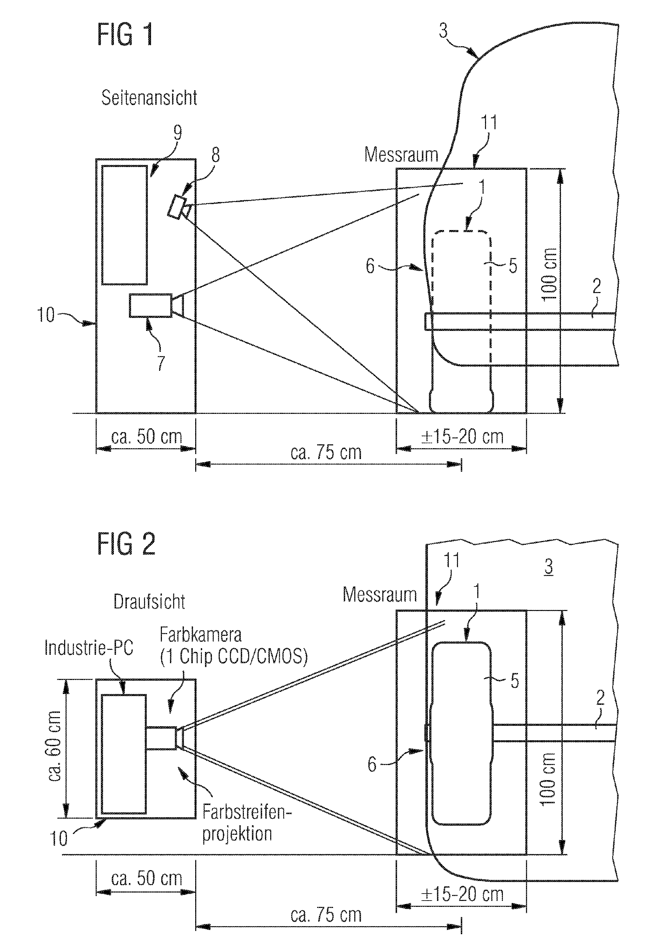

Die Figur 1 zeigt einen Sensor 10 sowie einen Messraum 11, wobei der Sensor in einem vorgegebenen Abstand von beispielsweise weniger als 1 Meter von dem Rad des Fahrzeugs 3 entfernt ist. Der Sensor ermittelt die Oberflächenkontur des Reifens 1 an dessen Stirnseite 6. Wesentliche Daten sind insbesondere in Bezug auf den Mantel 5, der unregelmäßige Unebenheiten aufweist, zu berechnen.

Der Sensor 10 umfasst eine Kamera als Bildwandler 8 und eine Licht-Projektionseinheit 7 sowie eine Auswerteinheit 9. Ungefähre Größenangaben sind der Figur 1 zu entnehmen. Wichtig ist die Möglichkeit der vollflächigen Beleuchtung des Objektes und der vollflächigen Bildaufnahme mit anschließender Auswertung zur Ermittlung eines topografischen Bildes.

Die Darstellung entsprechend Figur 2 bezieht sich auf die Seitenansicht, wobei in Figur 2 eine Aufsicht dargestellt ist. Bildwandler 8 und Licht-Projektionseinheit 7 sind in Figur 2 übereinander positioniert, so dass die unterschiedliche Beleuchtungs- und Bildaufnahmerichtung im Wesentlichen in Figur 1 sichtbar ist. Figur 2 gibt ähnliche Abmessungen des gesamten Aufbaus wieder.

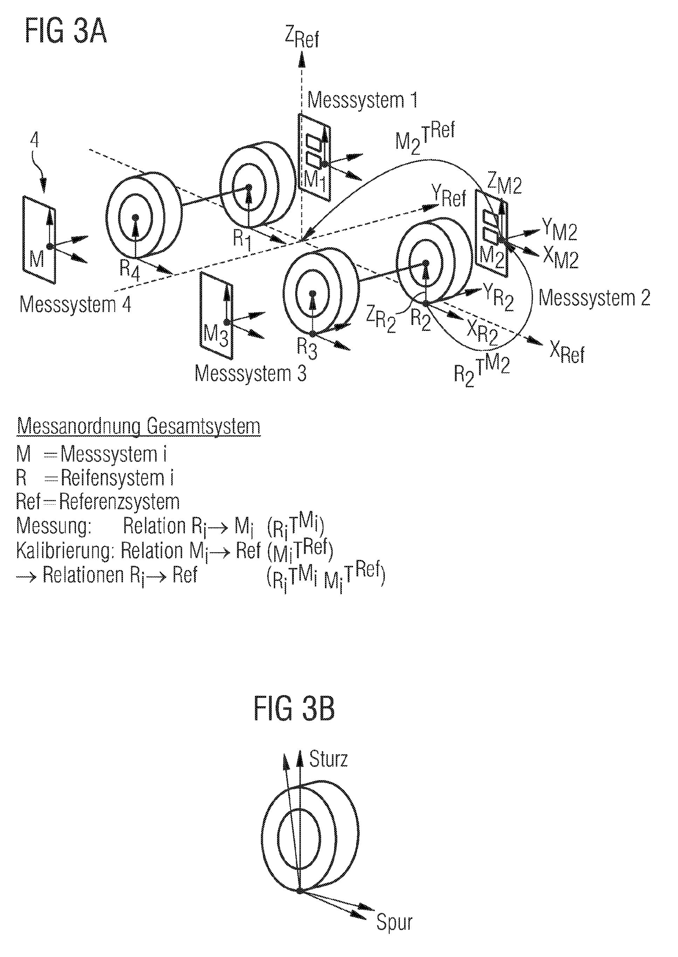

In Figur 3B ist am Beispiel eines einzelnen Reifens dargestellt, was bei der Vermessung der Achsgeometrie an einem Rad insgesamt eingestellt wird bzw. veränderbar ist. Die Spur bzw. die Spureinstellung erfolgt derart, dass bei einer neutralen Lenkradstellung das Rad zumindest annähernd einen Geradeauslauf gewährleistet. Dazu sind entsprechende Sollwerte einzuhalten. Der Sturz bzw. die Sturzeinstellung betreffen eine Verdrehung oder Verkippung des Rades bezogen auf eine in Längsrichtung des Referenzsystems liegende Achse. So kann bei falsch eingestelltem Sturz ein Rad zwar geradeaus laufen, steht in diesem Fall jedoch nicht senkrecht.

Figur 3A gibt die drei in dem beschriebenen System auftretenden Koordinaten oder Bezugssysteme wieder. Das Bezugssystem mit der Bezeichnung R bezieht sich auf das Reifensystem, welches zu beachten ist, wenn der Sensor beispielsweise auf die Beleuchtung des gesamten Reifens eingestellt werden muss. Ein Koordinatensystem, das sich auf das Messsystem oder Sensorsystem bezieht, ist mit M bezeichnet. Das im Gesamtsystem übergeordnete Referenzsystem Ref bezieht sich in diesem Fall auf das gesamte Fahrzeug, so dass sämtliche von den Sensoren aufgenommenen Daten in das Referenzsystem umgerechnet werden und jeweils die Lage der Referenzebene 12 bzw. des normalen Vektors eines Rades innerhalb des Referenzsystems angeben zu können. Somit lässt sich eine Abfolge in dem Sinn festlegen, dass eine Relation zwischen Reifensystem R hinsichtlich des Messsystems M besteht, wobei eine Kalibrierung vom Messsystem M zum Referenzsystem Ref vorhanden ist. Jedes Koordinatensystem hat für sich seine eigenen Dreiraumrichtungen.

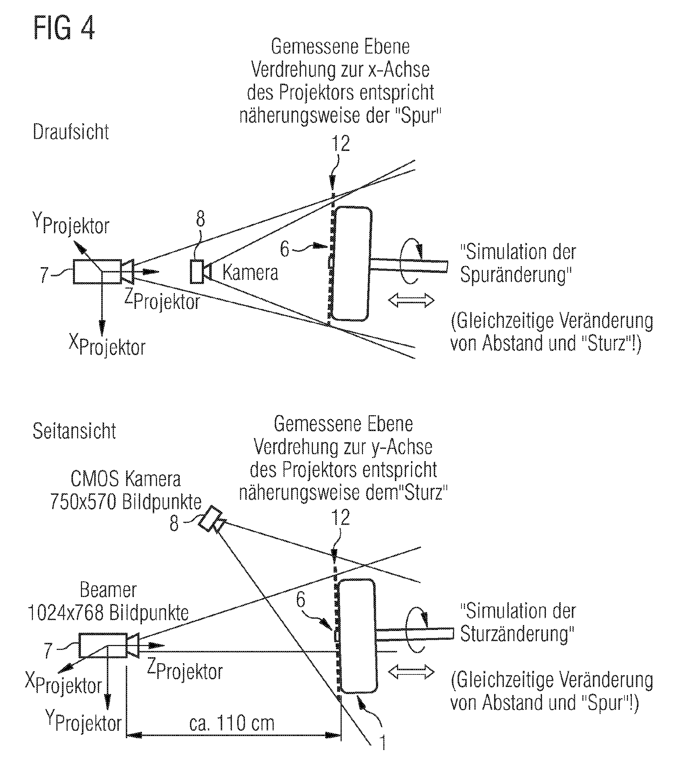

In der Figur 4 wird in der Draufsicht das Koordinatensystem des Projektors bzw. des Mess- oder Sensorsystems gezeigt. Projektor und Kamera sind, in der Draufsicht nicht sichtbar, vertikal versetzt angeordnet. Die Referenzebene 12, die durch Bildaufnahme und Auswertung der Stirnseite 6 des Rades 1 bestimmt wird, nimmt in diesem Fall eine Lage ein, die zur X-Achse des Projektors einen bestimmten Winkel aufweist. In diesem Bezugssystem kann die Spur des Rades gemessen werden, so dass ein bestimmter Sollwert einstellbar ist. Die weitere in Figur 4 dargestellt Ansicht ist eine Seitenansicht des Systems. Das Bezugssystem entspricht dem in der Draufsicht. Die Ausrichtung der Referenzebene 12 bietet in diesem Fall eine Vermessung des Sturzes des Rades und eine entsprechende Nachjustierung auf einen Sollwert. Als Licht-Projektionseinheit 7 wird ein sogenannter Beamer eingesetzt. Die Kamera ist eine CMOS-Kamera mit 750 x 570 Bildpunkten.

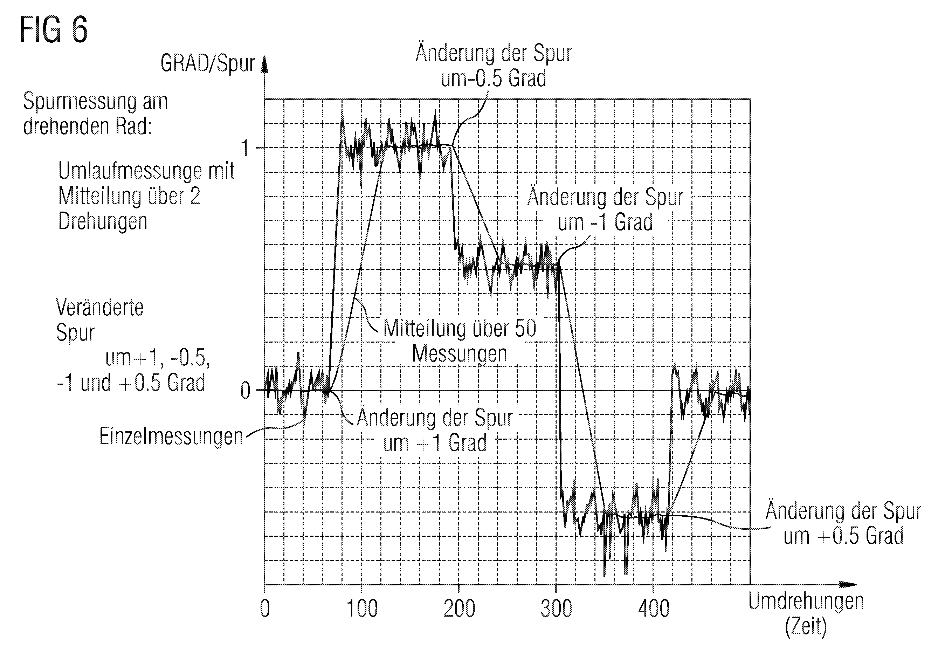

Einen ausschnittsleise dargestellten Ablaufalgorithmus für das Verfahren bietet die Figur. Zu Anfang des Verfahrens wird eine Objektbeleuchtung und Bildaufnahme durchgeführt. Die Bildauswertung ergibt eine Berechnung einer bestimmten Ebene, die charakteristisch ist für die Stellung des Rades im Raum bzw. relativ zu einem Referenzsystem. Diesbezüglich wird nach der ebenen Berechnung eine Referenzlage ermittelt bzw. ein Nullabgleich durchgeführt. Die nun folgende Auswertung betrifft die Ermittlung der Werte der Achsgeometrie wie Spur und Sturz. Eine anschließende Visualisierung ermöglicht es, aktuelle Werte und somit auch Abweichungen von einem Sollwert zu erkennen. Figur 6 zeigt den visualisierten Graph eines Testlaufs bei einer Spurvermessung. Das Koordinatensystem wird aufgespannt durch die Abszisse, an der die Zeit bzw. die Umdrehungen eines Rades angetragen sind und durch die Ordinate, die die Gradzahl der Spur angibt. Die gesamte dargestellte Messung entspricht zwei Umdrehungen eines Rades. Während dieser Zeit werden 50 Messungen durchgeführt, das heißt 50 Bildaufnahmen ermittelt und ausgewertet. Dabei wird schrittweise die Spur des Rades verändert und zwar von +1° auf -0,5°, auf -1° und auf +0,5°. Es ist erkennbar, dass Einzelmessungen eine Folge von Peaks in der Kurve ergeben. Die fünf verschiedenen Pegel der Messkurve zeigen auf jedem Pegel eine Reihenfolge von Peaks. Eine Mittelung dieser Spitzenwerte beispielsweise über 50 Messungen ergibt eine in Abschnitten stetig verlaufende Kurve, die zuverlässig die aktuelle Spureinstellung anzeigt.

## Patentansprüche

1. Verfahren zur Bestimmung der Achsgeometrie durch Aufnahme und Auswertung eines topographischen Bildes der Stirnseite (6) eines auf einer Achse (2) angebrachten Rades (1), bestehend aus folgenden Schritten:
- flächige Projizierung von Licht mit einer flächigen Codierung auf die Stirnseite (6) des Rades (1),
- flächige Aufnahme des von der Stirnseite (6) des Rades (1) reflektierten Lichtes aus einer anderen Richtung als der Licht-Projektionsrichtung durch einen Bildwandler (8),
- Ermittlung von dreidimensionalen Oberflächenkoordinaten für das topographische Bild der Stirnseite (6) des Rades (1) aus den Lichtsignalen, und
- Auswertung des topographischen Bildes in Bezug auf ein Referenzsystem.

2. Verfahren nach Anspruch 1, bei dem als Codierung ein Streifenmuster mit variierender Periodizität oder mit monochromen Gitterstrukturen eingesetzt werden.

3. Verfahren nach einem der vorhergehenden Ansprüche, bei dem die flächige Codierung durch eine Farbcodierung realisiert wird.

4. Verfahren nach einem der vorhergehenden Ansprüche, bei dem als Bildwandler (8) eine Video-Kamera eingesetzt wird.

5. Verfahren nach einem der vorhergehenden Ansprüche, bei dem die Ermittlung von Oberflächenkoordinaten mittels Triangulation erfolgt.

6. Verfahren nach einem der vorhergehenden Ansprüche, bei dem ein topographisches Bild die gesamte Stirnfläche (6) des Rades (1) umfasst.

7. Verfahren nach einem der Ansprüche 1 bis 5, bei dem ein topographisches Bild ringförmig ausgebildet ist und die Stirnfläche des Mantels (5) umfasst.

8. Verfahren nach einem der Ansprüche 1 bis 5, bei dem ein topographisches Bild mindestens eine Teilfläche der zu detektierenden Stirnfläche des Mantels (5) umfasst.

9. Verfahren nach einem der vorhergehenden Ansprüche, bei dem mehrere Bildaufnahmen an einem drehenden Rad (1) stattfinden, wobei das Rad zur Ermittlung einer Referenzebene mindestens eine volle Drehung ausführt.

10. Verfahren nach einem der vorhergehenden Ansprüche, bei dem zur Bestimmung der Achsgeometrie der Normalenvektor des Rades (1) verwendet wird.

11. Verfahren nach einem der vorhergehenden Ansprüche, bei dem hinsichtlich der Achsgeometrie der Sturz und/oder die Spur eines Rades über dessen Normalenvektor bestimmt wird.

12. Verfahren nach einem der vorhergehenden Ansprüche, bei dem zusätzlich zur Achsgeometrie weitere Eigenschaften des Rades (1), der Felge (4), des Mantels (5) oder angrenzender Karosseriebereiche, wie die Lage der Radhaus-Kante, ermittelt werden.

13. Verfahren nach einem der vorhergehenden Ansprüche, bei dem neben einem topographischen Bild der Objektoberfläche Farbvarianten derselben detektierbar sind.

14. Verfahren nach einem der vorhergehenden Ansprüche, bei dem das Referenzsystem (Ref) das Koordinatensystem eines Fahrzeuges ist.

15. Sensor (10) zur Bestimmung der Achsgeometrie durch Aufnahme und Auswertung eines topographischen Bildes der Stirnseite (6) eines auf einer Achse (2) angebrachten Rades (1), bestehend aus:
- einer Licht-Projektionseinheit (7) zur flächigen Projizierung von Licht mit einer flächigen Codierung auf eine Stirnseite (6) des Rades (1),
- einem flächig, das Rad (1) aus einer anderen als der Projektionsrichtung, aufnehmenden Bildwandler (8),
- einer Auswerteeinheit (9) zur Ermittlung von dreidimensionalen Oberflächenkoordinaten für das topographische Bild der Stirnseite (6) und zur Ermittlung der Achsgeometrie.

16. Sensor nach Anspruch 15, zur Oberflächenvermessung an einem drehenden Rad (1).

17. Sensor nach einem der vorhergehenden Ansprüche, bei dem der Bildwandler (8) eine CCD- oder CMOS- Farbkamera ist.

18. Sensor zur Bestimmung der Achsgeometrie durch Aufnahme und Auswertung eines topographischen Bildes der Stirnseite (6) eines auf einer Achse (2) angebrachten Rades (1), bei dem das von der Projektionseinheit projizierte Licht und die Auswerteeinheit (9) für die Durchführung des Verfahrens nach einem der Ansprüche 1 bis 14 eingerichtet sind.
